# EUROPEAN PATENT SPECIFICATION

(11) **EP 1 060 382 B1**
(45) Date of publication and mention of the grant of the patent: **05.12.2007**
(21) Application number: 99906635.0
(22) Date of filing: 04.02.1999
(51) Int. Cl.: G01N 21/35, B27N 1/02

(54) **A METHOD FOR CONTROLLING A PROCESS FOR THE PRODUCTION OF A CELLULOSE FIBRE CONTAINING PRODUCT**
METHODE ZUM KONTROLLIEREN EINES VERFAHRENS ZUR HERSTELLUNG EINES ZELLULOSEFASERN ENTHALTENDEN PRODUKTS
PROCEDE POUR CONTROLER UN PROCESSUS DE FABRICATION D'UN PRODUIT CONTENANT DES FIBRES DE CELLULOSE

(30) Priority: 05.03.1998 EP 98850031
(43) Date of publication of application: 20.12.2000
(73) Proprietor: Akzo Nobel N.V., 6800 SB Arnhem (NL); Casco Adhesives AB, 100 61 Stockholm (SE)
(72) Inventor: NORDIN, Sofia, S-752 26 Uppsala (SE); JOHNSSON, Bo, S-852 39 Sundsvall (SE); ENGSTRÖM, Björn, S-857 41 Sundsvall (SE)
(74) Representative: Jönsson, Christer
(86) International application number: PCT/SE1999/000144
(87) International publication number: WO 1999/045367

(56) References cited:
- WO-A-97/04299
- US-A- 5 532 487

## Description

The present invention relates to a method for controlling a process for the production of a cellulose fibre containing product from cellulose fibre containing raw material, in particular a process for the production of wood based panels such as particleboards.

The production of cellulose fibre containing products often involve addition of different substances during the production process. The purpose of the addition may be to facilitate the production process per se, or to effect the resulting product, or both Addition of various glues, often consisting of a glue system comprising a resin and a hardener, in the production of wood based panels is exemplary of an addition in order to effect the resulting product. An important parameter in this connection is often the proportion between the components making up the substance, if more than one, such as e.g. the proportions between resin and hardener in a glue, or the proportions between urea and formaldehyde in a glue containing those components. Another important parameter may be the proportions between different added substances, which are destined to different parts of the panel, e.g. in different layers of the panel.

US 5,532,487 discloses a method for the measurement and control of polyamides and polyamideprecursor mixtures by means of near-infrared spectroscopy. US 5,532,487 does not, however, disclose controlling of several substances influencing the same property of the product using NIR spectroscopy.

WO 97/04299 relates to a method for controlling process variables influencing parameters of wood based panels, including glue amounts and wax amounts, which method comprises analysing the raw material by means of a spectrometric method, linking the obtained spectral data into a combination with desired parameters, and comparing said combination with reference combinations consisting of reference data from reference raw material linked with known parameters of said reference material, whereby the reference combinations have been calibrated to known variables by means of multivariate analysis. There is however no suggestion about controlling any proportions relating to those additives.

It would however be desirable to be able to control such proportions, as by doing so, it should be possible to produce cellulose fibre containing product such as wood based panels with very specific properties at optimised technical and economical conditions. The problem to be solved by the present invention is thus to enable such controlling.This problem has been solved by the invention as defined by the appended claims. More particularly the present invention involves a method for controlling a process for the production of a cellulose fibre containing product from cellulose fibre.containing raw material, during which process various substances are added, at least two of which substantially influence the same property of said product in correspondence to the relation between said substances, whereby a calibration model has been established by way of a procedure comprising linking known reference values for said product property and corresponding known reference relations between the substances, by means of a mathematical function; the method comprises the steps of
I) applying the calibration model on the actual relation between the substances in order to predict the value for said product property;
II) comparing the predicted value for said product property with a desired target value for said product property;
   and, if said predicted value is not substantially equal to said target value, adjusting the actual relation between the substances in a predetermined way;
III) repeating steps I and II until said predicted value is substantially equal to said target value.

By the expression "in a predetermined way" is, in the present context, partly meant that it has been determined in advance whether the relation should be adjusted at all in the present turn in the loop defined by steps I to III; partly meant that it has been determined in advance whether the adjustment should be incremental or decremental depending on the fact per se that the predicted value is larger that the target value, irrespective of the size of the difference between those values, and vice versa, and partly meant that the absolute value of the adjustment has been determined in advance.

The present method presents a plurality of advantages to the producer of cellulose fibre containing products. By means of the present method a particleboard producer, for instance, can regulate one or more properties of the produced boards in a very fast and economical way.

In a preferred embodiment the calibration model has been established by means of a multivariate analysis; this also implies that the same kind of multivariate analysis is applied when the calibration model is applied on the actual relation. The multivariate analysis may, for instance, be principal component analysis (PCA), partial least squares regression (PLS), principal component regression (PCR), multilinear regression analysis (MLR), discriminant analysis, or any other suitable method for multivariate analysis. The PLS method is disclosed in detail in Carlsson R., "Design and optimization in organic synthesis", B.G.M. Vandeginste, O. M. Kvalheim, Eds., "Data handling in science and technology", (Elsevier, 1992), vol. 8, incorporated herein by reference. For a tutorial in PCA, PLS and PCR, see P. Geladi et al in "Partial Least-Squares Regression: A Tutorial" in Anal. Chim. Acta, 185, 1-32 (1986), which is incorporated herein by reference in its entirety. By MLR, the best fitting plane for the parameters as a function of the spectra is defined, using least squares techniques to define each boundary of the plane. This plane is then used to recognise and assign a predicted value to an unknown parameter value. Discriminant Analysis is a method whereby, by use of spectral data, the known parameter values are grouped into different clusters, separated by linear decision boundaries. From its spectrum, a sample of unknown parameter values then can be matched to a cluster, and the parameter value can be assigned a value, e.g. the average value of the cluster. Applied generally to the field of chemistry those statistic methods are also termed chemometrics methods. The technique of chemometrics is more fully explained in S.D. Brown, "Chemometrics", Anal. Chem. 62, 84R-101R (1990), which by reference is incorporated herein in its entirety.

In a preferred embodiment the cellulose fibre containing product is a wood based panel. The wood based panel may comprise two or more layers. One of the substances may for instance be added to substantially stay between the layers, in order to e.g. agglutinate (i.e. glue together) the layers. Alternatively, one substance may be added to be substantially contained within one of the layers, in order to e.g. bind wood based particles in a particle board, or to provide the layer with some property, or to enhance some already present property. The wood based panel is preferably a board, such as a particleboard, a medium density fibre board (MDF), a waferboard, an oriented strand board (OSB), a hardboard, or a board of plywood; in particular, the board is a particleboard. Background information on particleboard and the processes for the manufacturing thereof is set forth in "Modem Particleboard & dry-process fibreboard manufacturing" by Thomas M. Maloney (1993), (cf. especially Chapter 4 and 5), which by reference is incorporated herein in its entirety.

It should be understood that the two (or more) substances which have a substantial influence on the same property of said product in correspondence to the relation between said substances may very well lack any effect, or only have a weak effect on that (or any other) property when used isolated from each other. This, basically, is the case when, for instance, one substance is a resin and another one is a corresponding hardener. On the other hand, the effect of the substances may in another embodiment be of basically the same magnitude, e.g. when using two urea-formaldehyde glues having different U/F proportions. In the latter case the property of interest can be brought towards its target value by controlling the U/F proportion of an actually added, mixed glue within a range defined by the U/F proportions of the two glues, by applying the present method on the relation between the added and mixed amounts of the glues. If instead the glues are added to different layers of a board, and thus basically are not mixed with each other, the property of interest can still be controlled, and in this case the actual relation between the added, but not mixed, substances is used in the construction and application of the calibration model.

In one embodiment each one of the substances is a glue containing an amino resin, such as for instance a urea-formaldehyde resin (UF), a melamine-urea-formaldehyde resin (MUF), or a phenol- formaldehyde resin (PF), whereby the substances may differ from each other with regard to e.g. the content of formaldehyde. Other glues may however also be used, such as e.g. isocyanate resin (MDI).

The product properties that can be controlled by the present method are for instance density, density profile, internal bond strength, thickness swelling, absorption value, permeability value, perforator value, modulus of rapture (MOR), modulus of elasticity (MOE), parameters relating to volatile organic compounds (VOC), and emission chamber value; this, however, is not an exhaustive list of controllable properties. Basically any measurable property of the product may be controlled by the present method.

The total amount of substance is often also important with regard to the resulting product property. Thus, in one embodiment of the invention, in which the two substances have a substantial influence on said property also in correspondence to the added combined amount of the substances, the calibration model involves linking said known values for said product property with the corresponding known combined amounts of the substances added and the corresponding relations between the substances in said amounts; and the application of the calibration model involves linking of the actual relations between the substances and the corresponding relations between the substances in said amounts in order to predict the actual value for said product property.

In a particularly preferred embodiment of the present method the calibration model has been established by way of a procedure comprising analysing reference raw material, by means of an analysis method, to provide reference sample data, and linking said reference sample data with known values for said product property and corresponding known relations between the substances, by means of said mathematical function; the method additionally comprises the step of analysing the raw material, by means of said analysis method, to provide sample data; and the application of the calibration model involves linking of the sample data with the relation between the substances in order to predict the actual value for said product property.

This embodiment provides additional advantages to the producer of cellulose fibre containing products. By means of the present method a particleboard producer, for instance, may manufacture boards with high surface strength even from wooden raw material of inferior quality by compensating the lacking quality with a urea-formaldehyde glue having a high molar proportion of formaldehyde, which is used in the surface layer of the board, while the control of the dosage and the molar proportion of formaldehyde in the glue in the core layer based upon other desired properties such as for instance a specified density and/or a low formaldehyde emission value.

The sample data is preferably transferred into latent variables before being linked with the target value, as are preferably the reference sample data before they are linked with said known values.

In a particularly preferred embodiment of the present invention the analysis method is a spectrometric method. The sample data as well as the reference sample data is preferably processed in this instance to reduce noise and is also suitably adjusted for drift and diffuse light scatter, for instance by means of the Kubelka-Munk transformation (P. Kubelka, F. Munk, Z. Tech. Physik 12, 593 (1931), incorporated herein by reference), which takes account of absorption and scatter, the Multiplicative Scatter Correction (P. Geladi, D. MacDougall, H. Martens, Appl. Spect. 39, 491-500 (1985), incorporated herein by reference) where each spectrum is "corrected" in both offset and slope by comparing it to an "ideal" spectrum (the mean spectrum). Another way of linearising the spectral data involves the use of derivatives, e.g. up to the fourth order derivatives (A. Savitzky, M.J.E. Golay, Anal. Chem. 36, 1627-1639 (1964), incorporated herein by reference). The derivative of the spectrum results in a transformed spectrum, consisting only of the relative changes between the adjacent wavelengths, and it has been shown that the peak intensities of derived spectra tend to be more linear with concentration (T.C. O'Haver, T. Begley, Anal. Chem. 53, 1876 (1981), incorporated herein by reference). Linearisation can also be accomplished by use of the Fourier transformation, or by use of the Standard Normal Variate transformation (R. J. Barnes, M. S. Dhanoa and S. J. Lister, Appl. Spectrosc., Vol. 43, number 5, pp. 772-777 (1989), incorporated herein by reference).This noise reduction/drift and diffuse light scatter-adjustment is suitably done before the data is linked as set forth above. The spectrometric method may be an absorption, reflectance, emission or transmission spectrometric method, or any other conceivable spectrometric method. Although the spectrometric method may relate to any suitable kind of radiation at any wavelength range, it is preferred to use a spectrometric method operating in the wavelength range from about 180 to about 2500 nm, particularly from about 400 to about 2500 nm, and especially from about 1000 nm to about 2500 nm. It is particularly preferred to operate the present method in the near-infrared radiation (NIR) range. The principles of NIR spectroscopy are described by Williams, P.; Norris, K. (1987): New-Infrared Technology in the Agriculture and Food Industries. AACC, St. Paul/Min, and Sterk, E.; Luchter, K (1986): Near Infrared Analyses (NIRA) A Technology for Quantitative and Qualitative Analyses. (Applied Spectroscopy Revues 22:4), all of which are hereby incorporated by reference.

Technically, the spectrometric analysis can be performed by on-line, in-line or at-line optical fibre probing, or by taking individual samples for separate analysis. In any case the spectra are preferably subjected to further data treatment using values from several discrete wavelengths from each particular spectrum. The radiation used in the spectrometric method preferably impinges directly on the raw material.

In a specifically preferred embodiment of the present invention the produced cellulose fibre containing product is a particleboard comprising one core layer and two surface layers; the cellulose fibre containing raw material comprises sawdust, shavings, chips or shavings from round wood, or a combination thereof; the controlled product property is density, density profile, internal bond strength, MOR, MOE, thickness swelling, absorption value, permeability value, perforator value, or emission chamber value; the substances are glues obtained by mixing formaldehyde, urea, and optionally any other suitable component; and the glues differ from each other with regard to the proportions between formaldehyde and urea, whereby a first glue holds a higher proportion between formaldehyde and urea than a second glue.

In another embodiment the present method for controlling a process for the production of a cellulose fibre containing product is combined with EP 564,013, which relates to a method and a device for mixing binders using at least two components which are flowed from separate storage containers towards a common mixing point. The storage containers are continuously weighed, and their change of weight per unit of time is determined.
The present invention will now be further illustrated by means of some non-limiting examples.
Examples: Particleboards having a core layer and two surface layers were produced by mixing core and surface particles with urea-formaldehyde resin glue, forming the mixtures into 330 x 500 mm sheets, and pressing the sheets for 2.7 minutes at 185°C. Two slightly different urea-formaldehyde resin glues were used, both based on the same kind of urea-formaldehyde resin, Cascorit UF 1110 from Casco Products, Industrial Resins Division, Sundsvall, Sweden. One glue, glue A, had a formaldehyde to urea ratio, F/U ratio, of 0.9 and the other glue, glue B, had a F/U ratio of 1.3. Both glues contained 0.4 wt-% of wax (Kenosize 4550 from Casco Products, Sweden). The viscosities of the glues were about 300 mPas for glue A and about 800 mPas for glue B.

Following a 2⁴ experiment design having two centre points, a series of 18 particleboards were produced. Glue A and B were added to the core and the surface layers in varying amounts, providing varying F/U ratios in the core and the surface layers, according to Table I below.

Ammonium sulphate was used as hardener: 3.0 wt-% was added to the core layer and 1.0 wt-% to the surface layers.

| TABLE I | | | | |
|---|---|---|---|---|
| board # | Total glue amount in surface layer, wt-% | Total glue amount in core layer, wt-% | F/U ratio in surface layer | F/U ratio in core layer |
| | (YI) | (MI) | (Ym) | (Mm) |
| 1 | 10 | 7 | 1.05 | 1.05 |
| 2 | 10 | 7 | 1.15 | 1.05 |
| 3 | 10 | 7 | 1.05 | 1.15 |
| 4 | 10 | 7 | 1.15 | 1.15 |
| 5 | 12 | 7 | 1.05 | 1.05 |
| 6 | 12 | 7 | 1.15 | 1.05 |
| 7 | 12 | 7 | 1.05 | 1.15 |
| 8 | 12 | 7 | 1.15 | 1.15 |
| 9 | 10 | 9 | 1.05 | 1.05 |
| 10 | 10 | 9 | 1.15 | 1.05 |
| 11 | 10 | 9 | 1.05 | 1.15 |
| 12 | 10 | 9 | 1.15 | 1.15 |
| 13 | 12 | 9 | 1.05 | 1.05 |
| 14 | 12 | 9 | 1.15 | 1.05 |
| 15 | 12 | 9 | 1.05 | 1.15 |
| 16 | 12 | 9 | 1.15 | 1.15 |
| 17 | 11 | 8 | 1.1 | 1.1 |
| 18 | 11 | 8 | 1.1 | 1.1 |

The boards were analysed with respect to a number of parameters:
- density, determined by weighing strips of the board with known volume and dividing the mass with the volume. Values are expressed in kg/m³;
- internal bond (IB), which is the property of a given board to resist tension perpendicular to the plane of the board. Values are expressed in MPa;
- thickness swelling (TSW), measured by placing a board sample in water of a temperature of 20 or 23°C during 2-24h. Thickness of the sample is measured before and after the soaking. The thickness difference is divided by the original thickness and expressed in percent;
- absorption value (ABS) : a sample is weighed before and after the water exposure. The weight difference is divided by the original weight and expressed in percent;
- perforator value (PV), which expresses the formaldehyde content of the board at a certain moisture content (6.5%). The board is leached in toluene. The released formaldehyde is absorbed in water and determined photometrically. Values are expressed in mg HCHO/100 g oven-dry board;
- Formaldehyde release by the flask method, EN 717-3 (HCHO release). Values are expressed in mg HCHO/kg oven-dry board.
The obtained parameter values are set forth in Table II below.

| TABLE II | | | | |
|---|---|---|---|---|
| board # | IB | TSW | PV | HCHO release |
| 1 | 0.68 | 25.7 | 4.4 | 4.2 |
| 2 | 0.71 | 22.8 | 6.1 | 5.9 |
| 3 | 0.73 | 18.8 | 6.4 | 5.7 |
| 4 | 0.80 | 17.5 | 6.8 | 7.4 |
| 5 | 0.67 | 18.4 | 4.7 | 4.5 |
| 6 | 0.68 | 19.0 | 5.4 | 5.6 |
| 7 | 0.76 | 20.8 | 6.6 | 6.1 |
| 8 | 0.77 | 15.5 | 8.3 | 8.1 |
| 9 | 0.82 | 18.4 | 3.6 | 4.0 |
| 10 | 0.74 | 15.5 | 5.9 | 5.6 |
| 11 | 0.92 | 16.7 | 5.3 | 5.8 |
| 12 | 0.95 | 14.7 | 7.7 | 8.4 |
| 13 | 0.73 | 15.2 | 4.1 | 3.9 |
| 14 | 0.76 | 17.4 | 5.1 | 5.7 |
| 15 | 0.86 | 14.5 | 5.4 | 5.5 |
| 16 | 0.95 | 13.7 | 6.3 | 7.9 |
| 17 | 0.80 | 16.1 | 5.1 | 6.0 |
| 18 | 0.81 | 18.2 | 5.9 | 5.4 |

Partial least square regressions were carried out based on the values indicated above in order to find correlations between the obtained values in Table II and the parameters of Table I. The obtained coefficients of regression for these correlations are disclosed in Table III below. The coefficient of regression of an ideal correlation is 1.

| TABLE III | | |
|---|---|---|
| Parameter | Significant variables | R = coefficient of regression |
| IB | Ml, Mm, Mm x Ml | 0.96911 |
| TSW | Ml, Mm | 0.85754 |
| PV | Mm, Ym | 0.91957 |
| HCHO release | Mm, Ym | 0.97565 |

Apparently, it is possible to predict parameter values of cellulose fibre containing products by starting out from the relation between substances added during the production. As at least a person skilled in the art will appreciate, this clearly implies that the present method can be used for controlling a process for the production of a cellulose fibre containing product from cellulose fibre containing raw material, during which process various substances are added, at least two of which have a substantial influence on the same property of said product in correspondence to the relation between said substances.

## Claims

1. A method for controlling a process for the production of a cellulose fibre containing product from cellulose fibre containing raw material, during which process various substances are added, at least two of which have a substantial influence on the same property of said product in correspondence to the relation between said substances, **characterised in that** a calibration model has been established by way of a procedure comprising linking known reference values for said product property and corresponding known reference relations between the substances, by means of a mathematical function, and **in that** the method comprises the steps of
I) applying the calibration model on the actual relation between the substances in order to predict the value for said product property;
II) comparing the predicted value for said product property with a desired target value for said product property;
and, if said predicted value is not substantially equal to said target value, adjusting the actual relation between the substances in a predetermined way;
III) repeating steps I and II until said predicted value is substantially equal to said target value.

2. A method according to claim 1, **characterised in that** calibration model has been established by means of a multivariate analysis.

3. A method according to claim 2, **characterised in** the multivariate analysis is selected from principal component analysis, partial least squares regression, and principal component regression.

4. A method according to claim 1, **characterised in that** the cellulose fibre containing product is a wood based panel.

5. A method according to claim 4, **characterised in that** the wood based panel comprises two layers, and that one of the substances is added to substantially stay between the layers.

6. A method according to claim 4 or 5, **characterised in that** one of the substances is added to be substantially contained within one of the layers.

7. A method according to claim 4, **characterised in that** the wood based panel is a board.

8. A method according to claim 7, **characterised in that** the board is a particleboard.

9. A method according to claim 1, **characterised in that** each one of the substances is a glue containing an amino resin, whereby the substances differ from each other with regard to the content of formaldehyde.

10. A method according to claim 1, **characterised in that** said product property is density, density profile, internal bond strength, thickness swelling, absorption value, permeability value, perforator value, modulus of rapture, modulus of elasticity, VOC, or emission chamber value.

11. A method according to claim 1, **characterised in that** the two substances have a substantial influence on said property also in correspondence to the added combined amount of the substances; and the calibration model involves linking said known values for said product property with the corresponding known combined amounts of the substances added and the corresponding relations between the substances in said amounts; and **in that** the application of the calibration model involves linking of the actual relations between the substances and the corresponding relations between the substances in said amounts in order to predict the actual value for said product property.

12. A method according to claim 1, **characterised in that** the calibration model has been established by way of a procedure comprising analysing reference raw material, by means of an analysis method, to provide reference sample data, and linking said reference sample data with known values for said product property and corresponding known relations between the substances, by means of said mathematical function, and **in that** the method additionally comprises the step of analysing the raw material, by means of said analysis method, to provide sample data; and **in that** the application of the calibration model involves linking of the sample data with the relation between the substances in order to predict the actual value for said product property.

13. A method according to claim 12, **characterised in that** the sample data is transferred into latent variables before being linked with the target value, and **in that** the reference sample data is transferred into latent variables before being linked with said known values.

14. A method according to claim 12, **characterised in that** the analysis method is a spectrometric method.

15. A method according to claim 14, **characterised in that** the sample data as well as the reference sample data is processed to reduce noise and is adjusted for drift and diffuse light scatter.

16. A method according to claim 14, **characterised in that** the spectrometric method is an absorption, reflectance, emission or transmission spectrometric method.

17. A method according to claim 14, **characterised in that** the spectrometric method is a NIR spectrometric method.

18. A method according to claim 15, **characterised in that** the produced cellulose fibre containing product is a particleboard comprising one core layer and two surface layers; the cellulose fibre containing raw material comprises sawdust, shavings, chips or shavings from round wood, or a combination thereof; the product property is density, density profile, internal bond strength, thickness swelling, absorption value, permeability value, perforator value, or emission chamber value; the substances are glues obtained by mixing formaldehyde, urea, and optionally any other suitable component; and the glues differ from each other with regard to the proportions between formaldehyde and urea, whereby a first glue holds a higher proportion between formaldehyde and urea than a second glue.

## Patentansprüche

1. Verfahren zum Kontrollieren eines Verfahrens zur Herstellung eines Zellulosefasern enthaltenden Produkts aus Zellulosefasern enthaltendem Rohmaterial, wobei während des Verfahrens verschiedene Stoffe zugegeben werden, von denen mindestens zwei einen wesentlichen Einfluss auf die gleiche Eigenschaft des Produkts gemäß dem Verhältnis zwischen den Stoffen haben, **dadurch gekennzeichnet, dass** ein Kalibriermodell mit einem Verfahren aufgestellt wurde, welches das Verknüpfen bekannter Bezugswerte der Produkteigenschaft und entsprechender bekannter Bezugsverhältnisse zwischen den Stoffen mit einer mathematischen Funktion umfasst, und dass das Verfahren die folgenden Schritte umfasst:
I) Anwenden des Kalibriermodells auf das Istverhältnis der Stoffe, um den Wert der Produkteigenschaft vorherzusagen;
II) Vergleichen des vorhergesagten Wertes der Produkteigenschaft mit dem erwünschten Zielwert der Produkteigenschaft;
und, wenn der vorhergesagte Wert nicht im Wesentlichen gleich dem Zielwert ist, Anpassen des Istverhältnisses zwischen den Stoffen in einer vorbestimmten Weise;
III) Wiederholen der Schritte I) und II), bis der vorhergesagte Wert im Wesentlichen gleich dem Zielwert ist.

2. Verfahren gemäß Anspruch 1, **dadurch gekennzeichnet, dass** das Kalibriermodell mit Hilfe einer multivariaten Analyse aufgestellt wurde.

3. Verfahren gemäß Anspruch 2, **dadurch gekennzeichnet, dass** die multivariate Analyse ausgewählt ist aus Hauptkomponentenanalyse, partieller Regression nach dem Verfahren der kleinsten Quadrate und Hauptkomponentenregression.

4. Verfahren gemäß Anspruch 1, **dadurch gekennzeichnet, dass** das Zellulosefasern enthaltende Produkt eine Platte auf Holzbasis ist.

5. Verfahren gemäß Anspruch 4, **dadurch gekennzeichnet, dass** die Platte auf Holzbasis zwei Schichten umfasst und dass einer der Stoffe so zugegeben wird, dass er im Wesentlichen zwischen den Schichten verbleibt.

6. Verfahren gemäß Anspruch 4 oder 5, **dadurch gekennzeichnet, dass** einer der Stoffe so zugegeben wird, dass er im Wesentlichen in einer der Schichten enthalten ist.

7. Verfahren gemäß Anspruch 4, **dadurch gekennzeichnet, dass** die Platte auf Holzbasis ein Brett ist.

8. Verfahren gemäß Anspruch 7, **dadurch gekennzeichnet, dass** das Brett eine Spanplatte ist.

9. Verfahren gemäß Anspruch 1, **dadurch gekennzeichnet, dass** jeder der Stoffe ein Aminoharz enthaltender Klebstoff ist, wobei sich die Stoffe in Bezug auf ihren Formaldehydgehalt voneinander unterscheiden.

10. Verfahren gemäß Anspruch 1, **dadurch gekennzeichnet, dass** die Produkteigenschaft die Dichte, das Dichteprofil, die interne Haftfestigkeit, die Dickenschwellung, der Absorptionswert, der Permeabilitätswert, der Perforationswert, das Bruchmodul, das Elastizitätsmodul, die flüchtigen organischen Bestandteile (VOC) oder der Emissionskammerwert ist.

11. Verfahren gemäß Anspruch 1, **dadurch gekennzeichnet, dass** die zwei Stoffe einen wesentlichen Einfluss auf die Eigenschaft auch gemäß der zugefügten kombinierten Menge der Stoffe haben; und das Kalibriermodell das Verknüpfen der bekannten Werte der Produkteigenschaft mit den entsprechenden bekannten kombinierten Mengen der zugefügten Stoffe und den entsprechenden Verhältnissen zwischen den Stoffen in den Mengen einbezieht; und dass die Anwendung des Kalibriermodells das Verknüpfen der Istverhältnisse zwischen den Stoffen und der entsprechenden Verhältnisse zwischen den Stoffen in den Mengen einbezieht, um den Istwert der Produkteigenschaft vorherzusagen.

12. Verfahren gemäß Anspruch 1, **dadurch gekennzeichnet, dass** das Kalibriermodell mit einem Verfahren umfassend Analysieren des Referenzrohmaterials mit Hilfe einer Analysemethode, um Referenzprobedaten bereitzustellen, und Verknüpfen der Referenzprobedaten mit bekannten Werten der Produkteigenschaft und entsprechenden bekannten Verhältnissen zwischen den Stoffen mit Hilfe der mathematischen Funktion eingerichtet wurde, und dass das Verfahren zusätzlich den Schritt des Analysierens des Rohmaterials mit Hilfe der Analysemethode umfasst, um Probedaten bereitzustellen, und dass die Anwendung des Kalibriermodells das Verknüpfen der Probedaten mit dem Verhältnis zwischen den Stoffen einbezieht, um den Istwert der Produkteigenschaft vorherzusagen.

13. Verfahren gemäß Anspruch 12, **dadurch gekennzeichnet, dass** die Probedaten in latente Variablen überführt werden, bevor sie mit den Zielwerten verknüpft werden, und dass die Referenzprobedaten in latente Variablen überführt werden, bevor sie mit den bekannten Werten verknüpft werden.

14. Verfahren gemäß Anspruch 12, **dadurch gekennzeichnet, dass** das Analyseverfahren ein spektrometrisches Verfahren ist.

15. Verfahren gemäß Anspruch 14, **dadurch gekennzeichnet, dass** sowohl die Probedaten als auch die Referenzprobedaten verarbeitet werden, um das Rauschen zu reduzieren, und angepasst werden für Drift und Streulicht.

16. Verfahren gemäß Anspruch 14, **dadurch gekennzeichnet, dass** das spektrometrische Verfahren ein Absorptions-, Reflexions-, Emissions- oder Transmissionsspektrometrisches Verfahren ist.

17. Verfahren gemäß Anspruch 14, **dadurch gekennzeichnet, dass** das spektrometrische Verfahren ein NIR-spektrometrisches Verfahren ist.

18. Verfahren gemäß Anspruch 15, **dadurch gekennzeichnet, dass** das hergestellte Zellulosefasern enthaltende Produkt eine Spanplatte ist, welche eine Kernschicht und zwei Oberflächenschichten umfasst; das Zellulosefasern enthaltende Rohmaterial Sägemehl, Späne, Schnitzel oder Späne von Rundholz oder Kombinationen davon umfasst; die Produkteigenschaft die Dichte, das Dichteprofil, die interne Haftfestigkeit, die Dickenschwellung, der Absorptionswert, der Permeabilitätswert, der Perforationswert oder der Emissionskammerwert ist; die Stoffe Klebstoffe sind, welche durch Mischen von Formaldehyd, Harnstoff und gegebenenfalls anderen geeigneten Komponenten erhalten werden; und die Klebstoffe sich bezüglich der Anteile an Formaldehyd und Harnstoff voneinander unterscheiden, wobei ein erster Klebstoff ein größeres Verhältnis zwischen Formaldehyd und Harnstoff aufweist als ein zweiter Klebstoff.

## Revendications

1. Méthode de régulation d'un procédé de production d'un produit contenant des fibres de cellulose à partir d'une matière première contenant des fibres de cellulose, procédé au cours duquel on ajoute diverses substances d'entre lesquelles au moins deux ont une influence sensible sur la même caractéristique dudit produit en fonction de la relation entre ces substances, **caractérisée en ce qu'**on a établi un modèle d'étalonnage en suivant un protocole comportant le fait de relier des valeurs de référence connues de ladite caractéristique du produit aux relations de référence connues correspondantes entre les substances, au moyen d'une fonction mathématique, et ce que cette méthode comporte les étapes suivantes :
I) appliquer le modèle d'étalonnage à la relation réelle entre les substances, afin de prédire la valeur de ladite caractéristique du produit ;
II) comparer la valeur prédite de ladite caractéristique du produit avec une valeur cible voulue de cette caractéristique du produit ;
et, si cette valeur prédite n'est pas pratiquement égale à cette valeur cible, ajuster la relation réelle entre les substances, d'une manière prédéterminée ;
III) et répéter les étapes I et II jusqu'à ce que ladite valeur prédite soit pratiquement égale à ladite valeur cible.

2. Méthode conforme à la revendication 1, **caractérisée en ce qu'**on a établi le modèle d'étalonnage au moyen d'une analyse multivariable.

3. Méthode conforme à la revendication 2, **caractérisée en ce que** l'analyse multivariable est choisie parmi l'analyse en composantes principales, la régression sur moindres carrés partiels et la régression sur composantes principales.

4. Méthode conforme à la revendication 1, **caractérisée en ce que** le produit contenant des fibres de cellulose est un panneau à base de bois.

5. Méthode conforme à la revendication 4, **caractérisée en ce que** le panneau à base de bois comprend deux couches, et **en ce que** l'une des subtances ajoutées est destinée à pratiquement demeurer entre ces couches.

6. Méthode conforme à la revendication 4 ou 5, **caractérisée en ce que** le panneau à base de bois comprend deux couches, et **en ce que** l'une des subtances ajoutées est destinée à être pratiquement contenue au sein de l'une de ces couches.

7. Méthode conforme à la revendication 4, **caractérisée en ce que** le panneau à base de bois est une planche.

8. Méthode conforme à la revendication 7, **caractérisée en ce que** la planche est une planche de particules.

9. Méthode conforme à la revendication 1, **caractérisée en ce que** chacune des substances est une colle contenant une résine aminoplaste, ces substances différant entre elles pour ce qui est de leur teneur en formaldéhyde.

10. Méthode conforme à la revendication 1, **caractérisée en ce que** ladite caractéristique du produit est sa masse volumique, son profil de masse volumique, sa force de liaison interne, son pouvoir de gonflement en épaisseur, son pouvoir d'absorption, sa perméabilité, son indice perforateur, son module de rupture, son module d'élasticité, sa teneur en composés organiques volatils, on son indice d'émission en chambre.

11. Méthode conforme à la revendication 1, **caractérisée en ce que** les deux substances ont une influence sensible sur ladite caractéristique en fonction, aussi, des quantités ajoutées, combinées, de ces substances, **en ce que** l'établissement du modèle d'étalonnage implique de relier lesdites valeurs connues de ladite caractéristique du produit aux quantités combinées connues correspondantes des substances ajoutées et aux relations correspondantes entre ces substances présentes en lesdites quantités, et **en ce que** l'application du modèle d'étalonnage implique de relier les relations réelles entre les substances et les relations correspondantes entre ces substances présentes en lesdites quantités, afin de prédire la valeur réelle de ladite caractéristique du produit.

12. Méthode conforme à la revendication 1, **caractérisée en ce que** l'on a établi le modèle d'étalonnage en suivant un protocole comportant le fait d'analyser une matière première de référence, selon une certaine méthode d'analyse, pour obtenir une donnée d'échantillon de référence, et le fait de relier cette donnée d'échantillon de référence aux valeurs connues de ladite caractéristique du produit et aux relations connues correspondantes entre les substances, au moyen de ladite fonction mathématique, **en ce que** cette méthode comporte en outre une étape où l'on analyse la matière première, selon ladite méthode d'analyse, pour obtenir une donnée d'échantillon, et **en ce que** l'application du modèle d'étalonnage implique de relier cette donnée d'échantillon à la relation entre les substances, afin de prédire la valeur réelle de ladite caractéristique du produit.

13. Méthode conforme à la revendication 12, **caractérisée en ce que** la donnée d'échantillon est transférée en variables latentes avant d'être reliée à la valeur cible, et **en ce que** la donnée d'échantillon de référence est transférée en variables latentes avant d'être reliée auxdites valeurs connues.

14. Méthode conforme à la revendication 12, **caractérisée en ce que** la méthode d'analyse est une méthode spectrométrique.

15. Méthode conforme à la revendication 14, **caractérisée en ce que** l'on traite la donnée d'échantillon, ainsi que la donnée d'échantillon de référence, de manière à réduire le bruit, et **en ce qu'**on les ajuste pour tenir compte de la dérive et de la dispersion de lumière diffuse.

16. Méthode conforme à la revendication 14, **caractérisée en ce que** la méthode spectrométrique est une méthode de spectrométrie d'absorption, de réflexion, d'émission ou de transmission.

17. Méthode conforme à la revendication 14, **caractérisée en ce que** la méthode spectrométrique est une méthode de spectrométrie dans le proche infra-rouge.

18. Méthode conforme à la revendication 15, **caractérisée en ce que** le produit contenant des fibres de cellulose qu'on fabrique est une planche de particules comprenant une couche de coeur et deux couches de surface, la matière première contenant des fibres de cellulose comprend de la sciure, des rognures, des copeaux ou des éclats de bois rond, ou une combinaison de tels fragments de bois, ladite caractéristique du produit est sa masse volumique, son profil de masse volumique, sa force de liaison interne, son pouvoir de gonflement en épaisseur, son pouvoir d'absorption, sa perméabilité, son indice perforateur, on son indice d'émission en chambre, lesdites substances sont des colles qu'on a obtenues en mélangeant du formaldéhyde, de l'urée et, en option, tout autre composant approprié, et ces colles diffèrent entre elles pour ce qui est de la proportion entre formaldéhyde et urée, cette proportion entre formaldéhyde et urée étant plus grande chez une première colle que chez une deuxième colle.
